# EUROPEAN PATENT APPLICATION

(11) **EP 1 932 785 A2**
(43) Date of publication of application: **18.06.2008**
(21) Application number: 07024039.5
(22) Date of filing: 12.12.2007
(51) Int. Cl.: B65G 47/28, B65G 15/58

(54) **Spacing method and apparatus**

(30) Priority: 15.12.2006 IT MO20060409
(71) Applicant: Santi, Gabriele, 41045 Montefiorino (MO) (IT)
(72) Inventor: Santi, Gabriele, 41045 Montefiorino (MO) (IT)
(74) Representative: Feltrinelli, Secondo Andrea

(57) **Abstract**

The method, suitble for spacing out products (3; 30) arranged in rows or columns with first relative distances in between (S1), comprises: placing said products (3; 30) in adherent contact with a deformable plane (2; 20); elongating said deformable plane (2; 20) at least in a direction (A1) parallel with said rows or columns, in such a way as to increase said first relative inter-distances (S1) up to second relative inter-distances (S2) greater than said first inter-distances (S1); the apparatus (1), suiplane for spacing out products (3; 30) arranged in rows or columns comprises a supporting plane (2; 20) for supporting said products (3; 30), extensible in at least one direction of elongation (A1).

## Description

### TECHNICAL FIELD.

The invention relates to a spacing method and apparatus.

### TECHNOLOGICAL BACKGROUND.

In many industrial sectors products are moved that are formed into rows or columns and which are conveyed in this configuration by means of conveyors between the various operating stations.

An industrial sector that needs to move products arranged in rows and columns is the ceramic sector for the production of tiles, above all small tiles made to form mosaic decorations.

To be able to make tile compositions, for example, but not only, mosaic compositions, according to pre-established designs, automatic systems are used that collect up the small tiles manufactured, arrange them on conveyors one alongside the other and then convey them into a sorting apparatus which is composed of a series of chutes, one alongside the other, each of which has an end that terminates in a support tray equipped with a positioning grid which is composed of a series of cells.

The sorting device automatically channels each small tile along a predetermined chute that takes it into one of the cells for which it is destined: following the gradual deposit of a multitude of small tiles and according to a predetermined operating diagram, the desired design is normally created in the grid.

Once this has been completed, on one face of the composition, a flexible laminar support is glued, normally a thin mesh of plastic material, that permits picking up all the small tiles off the grid at the same time and thus moving the created composition without this being damaged or altered.

One technical problem associated with known systems is being able to split up the small tiles after they have been arranged in rows or columns on the conveyors, in such a way that they can be transferred and channelled into the respective chutes to which they are destined.

To obtain this separation, the small tiles must be adequately spaced out, in such a way that the automatic pickup parts designed to grip them and transfer them from the conveyors to the chutes can capture and deposit them in the latter.

Pratically, spaces have to be created between the small tiles in which the pendant apparatus normally equipping the pickup parts can insert themselves to firmly grip each small tile and move it without the risk of its falling.

According to another technique, the small tiles are picked up by means of suction cups arranged in rows substantially the same as those formed by the small tiles on the conveyors and which are intended to be automatically moved by relative motorisation units, such as, for example, special trolleys moving on slide guides and which support arms that bear the suction cups on their respective ends, in such a way that these can be placed in contact with the surfaces of the small tiles to be able to suction and withhold them to transfer them between the conveyors and the chutes to which they are destined.

When the tiles are positioned on their respective chutes, the suction cups are switched off and the tiles fall inside the chutes and slide towards their respective cell of the grid, positioning inside this.

This state of the art does have a series of drawbacks.

A first drawback is that it is very hard to insert the grip parts between the tiles arranged one alongside the other to be able to grip them because the tiles offer a certain resistance to movement on the conveyor, above all those placed between two other tiles and, consequently, these grip parts, in order to pick up a tile, due to their thickness, find it very hard to insert themselves in between nearby tiles making up a row because, to do so, the nearby ones also have to be moved causing them to slip onto the conveyor.

Another drawback is that in the event of the tiles being picked up using suction cups, the alignment of these with respect to the tiles to be picked up forming the rows is not always precise and it can occur that some tiles are not correctly captured by the corresponding suction cup and falls back onto the conveyor and overturns.

This overturning therefore requires the operation of another automatic device, designed to detect and turn back over any overturned tiles, thereby increasing the production costs of the compositions to be made.

### OBJECTS OF THE INVENTION.

One object of the invention is to improve the state of the art.

Another object of the invention is to develop a method suitable for spacing out products arranged in rows or columns, that allows achieving quick spacing without using particularly complicated and expensive parts.

Another object of the invention is to make a spacing apparatus having a simple and inexpensive structure.

A further object of the invention is to make a spacer apparatus that can be fitted to all existing production lines, without having to make complicated structural changes to these production lines.

According to an aspect of the invention, a method is provided suitable for spacing out products arranged in rows or columns with first relative distances in between characterized in that it comprises: placing said products in adherent contact with a defonnable plane; elongating said deformable plane at least in a direction parallel with said rows or columns, in such a way as to increase said first relative inter-distances up to second relative inter-distances greater than said first inter-distances.

According to another aspect of the invention an apparatus is provided suitable for spacing out products arranged in rows or columns comprising a supporting plane for supporting said products, characterized in that said supporting plane can be extended in at least one direction of elongation.

The spacing method and apparatus thus allow spacing out products arranged neatly in rows or columns on an extensible supporting plane, by simply extending the supporting plane in a direction of elongation parallel with the rows or the columns, in such a way as to gradually space out the products resting on it.

### BRIEF DESCRIPTION OF THE DRAWINGS.

Further characteristics and advantages of the invention will appear more evident from the detailed description of a spacing apparatus illustrated indicatively by way of non limiting example, in the attached drawings wherein:
Figure 1 is an interrupted perspective view of an extensible belt conveyor, in a not elongated configuration in which some conveyed products are substantially arranged one alongside the other forming a row;
Figure 2 is an interrupted perspective view of the conveyor of Figure 1 in an elongated configuration in which the conveyed products are spaced out due to the elongation of the conveyor belt;
Figure 3 is a side schematic view of a belt conveyor wherein the dotted lines show an elongation of the belt and the consequent movement of a product with respect to a contiguous one;
Figure 4 is an interrupted view of a longitudinal section of the belt of the conveyor of Figure 1, taken according to a IV-IV plane;
Figure 5 is an interrupted view of a longitudinal section of the belt of the conveyor of Figure 2 taken according to a V-V plane;
Figure 6 is an interrupted view of a section of a conveyor belt according to a further possible embodiment which comprises a suction of conveyed products turned downwards;
Figures 7a and 7b are perspective views of a general supporting plane for products to space out, which can be elongated in two directions of elongation, in a not elongated condition and in an elongated condition respectively.

### EMBODIMENTS OF THE INVENTION:

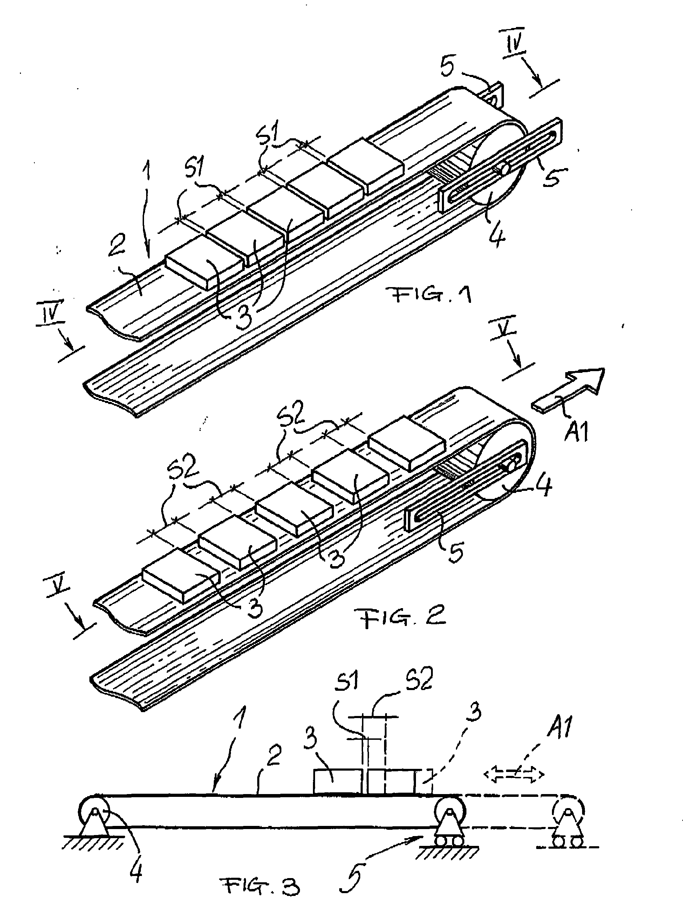

With reference to the Figures 1-5, by 1 is indicated a belt conveyor 2 defining a supporting plane for resting products, in the specific case, ceramic tiles or mosaic tesserae, arranged in a row and indicated by reference number 3.

The belt 2 is wrapped on corresponding motor and transmission rollers, indicated by 4, at least one of which is movable on side guides 5, and is made so as to be able to elongate, when subject to traction, at least in one direction of elongation "A1".

With the expression *made so as to be able to elongate* is meant that the belt 2 can be made both of elastic material, such as, e.g., an elastomer or a rubber, which permit obtaining desired elongations and returning to the initial configuration once the traction action ends, or with a mesh structure, able to extend and to shrink when subjected to traction and then released.

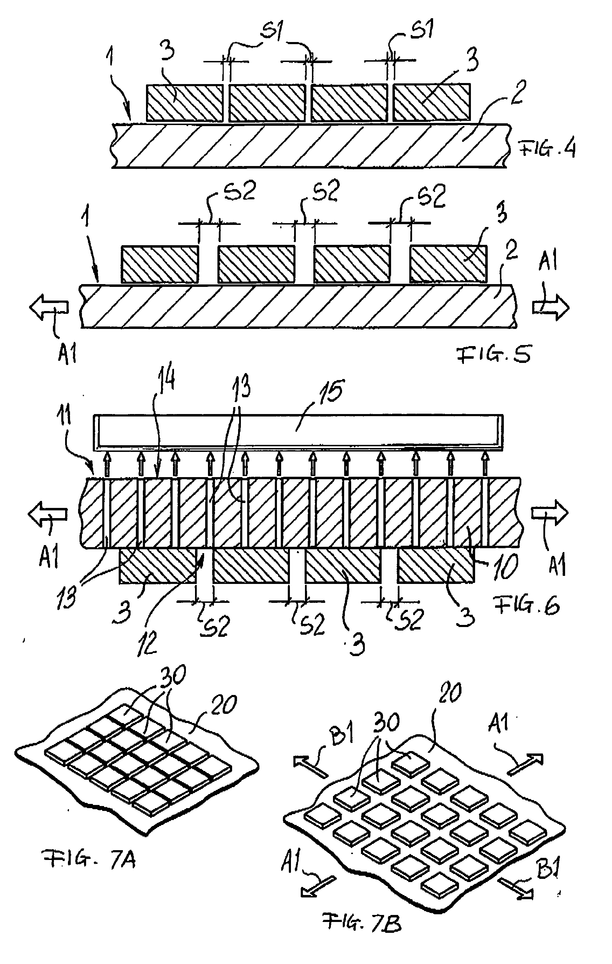

With reference to the Figures 1 and 4 in which the belt 2 of the conveyor 1 is not undergoing traction, it will be noticed that the ceramic tiles 3 are arranged one alongside the other to form a row and show very small relative inter-distances "S1" and that, in some cases these can be nil because the tiles 3 can be placed one in contact with the other.

With reference to the Figures 2 and 5, it will be seen that the belt undergoes a traction according to a direction of elongation "A1" and extends in this direction.

This elongation causes an increase in the inter-distances between the tiles 3 up to a desired value "S2", because these adhere to the surface of the belt 2 due to their own weight and follow its dilation caused by the elongation.

With reference to the Figure 8, it will be noticed that the belt 10 of the conveyor 11 is crossed by a plurality of small ducts 13 that terminate on the surfaces 12 and 14 of the belt 10 with capillary holes.

The ducts 13 can be placed in communication with a suction apparatus or made ready to create vacuum and generally indicated by 15.

In this way, the tiles 3 can also be conveyed in suspended position, turned downwards, as shown in the Figure 6 and increase or reduce their inter-distances as previously indicated, depending on whether the belt 10 is elongated in the elongation direction "A1" or left in its standard configuration.

In this case as well, the belt 10 is made so as to be able to obtain desired elongations, meaning either from elastically deformable materials or with a mesh structure.

With reference to the Figures 7a and 7b, it will be noticed that a generic supporting plane indicated by 20 made in such a way as to obtain elongations according to two directions of elongation indicated by "A1" and "B1" makes it possible to change the inter-distances between products 30 resting on the plane 20, maintaining an initial arrangement of the latter, in the specific case in rows and columns.

The plane 20 can therefore be positioned along any conveyor system of products 30 at points where it is necessary to space out the products 30 the one from the other.

## Claims

1. Method, suitable for spacing out products (3; 30) arranged in rows or columns with first relative distances in between (S1), **characterized in that** it comprises: placing said products (3; 30) in adherent contact with a deformable plane (2; 20); elongating said deformable plane (2; 20) at least in a direction (A1) parallel with said rows or columns, in such a way as to increase said first relative inter-distances (S1) up to second relative inter-distances (S2) greater than said first relative inter-distances (S1).

2. Method according to claim 1, wherein said first relative inter-distances (S1) are substantially nil.

3. Method according to claim 1, wherein said elongating comprises elongating elastically.

4. Method according to claim 1, wherein said elongating comprises elongating in two directions (S1, B1) of elongation intersected between them.

5. Method according to claim 1, wherein said deformable plane (2; 20) comprises a plane in elastomer material.

6. Method according to claim 1, wherein said deformable plane (2; 20) comprises a plane in rubber type material.

7. Method according to claim 1, wherein said deformable plane (2; 20) comprises a plane with mesh body.

8. Method according to claim 1, wherein said deformable plane comprises a conveyor plane (2) of a conveyor apparatus (1).

9. Method according to claim 1, wherein said placing in adherent contact comprises temporarily withholding said products (3; 30) against said deformable plane (2; 20) by means of withholding parts (13, 15).

10. Method according to claim 9, wherein said withholding comprises withholding on an upper face (14) of said deformable plane (2; 20).

11. Method according to claim 9, wherein said withholding comprises withholding on a lower face (12) of said deformable plane (2; 20).

12. Apparatus, suiplane for spacing out products (3; 30) arranged in rows or columns comprising a supporting plane (2; 20) for supporting said products (3; 30), **characterized in that** said supporting plane (2; 20) can be extended in at least one direction of elongation (A1).

13. Apparatus according to claim 12, wherein said supporting plane (2; 20) can be elastically elongated.

14. Apparatus according to claim 12, wherein said supporting plane (2; 20) can be elongated in two intersected directions (A1, B1).

15. Apparatus according to claim 12, wherein said supporting plane comprises a conveyor plane (2) of a conveyor apparatus (1).

16. Apparatus according to claim 12, wherein said supporting plane (2; 20) comprises a supporting plane in elastomer material.

17. Apparatus according to claim 12, wherein said supporting plane (2; 20) comprises a supporting plane in rubber type material.

18. Apparatus according to claim 12, wherein said supporting plane (2; 20) comprises a supporting plane with mesh body.

19. Apparatus according to any of the claims from 12 to 18, wherein said supporting plane (2; 20) comprises / can be associated with withholding means (13, 15) of said products (3; 30) against a face (12, 14) of said supporting plane.

20. Apparatus according to claim 19, wherein said withholding means comprise: a plurality of through holes (13) obtained transversally in said supporting plane (2; 20); suction means (15) placed in connection with said through holes (13).
